(19) Europäisches Patentamt
European Patent Office
Office européen des brevets

(11) **EP 3 352 146 B1**

(12) **EUROPEAN PATENT SPECIFICATION**

(45) Date of publication and mention
of the grant of the patent:
**26.04.2023 Bulletin 2023/17**

(21) Application number: **16845517.8**

(22) Date of filing: **29.04.2016**

(51) International Patent Classification (IPC):
***G07D 7/20*** (2016.01)          ***B65H 7/12*** (2006.01)
***G07D 7/183*** (2016.01)

(52) Cooperative Patent Classification (CPC):
**G07D 11/237; B65H 7/12; G07D 7/183;**
G07D 2211/00

(86) International application number:
**PCT/CN2016/080650**

(87) International publication number:
**WO 2017/045403 (23.03.2017 Gazette 2017/12)**

(54) **DETECTION METHOD AND APPARATUS FOR OVERLAPPED NOTES**

DETEKTIONSVERFAHREN UND VORRICHTUNG FÜR ÜBERLAPPTE BANKNOTEN

PROCÉDÉ ET APPAREIL DE DÉTECTION DE BILLETS SE CHEVAUCHANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.09.2015 CN 201510594951**

(43) Date of publication of application:
**25.07.2018 Bulletin 2018/30**

(73) Proprietor: **GRG Banking Equipment Co., Ltd.**
**Guangzhou, Guangdong 510663 (CN)**

(72) Inventors:
• **QIU, Xinhua**
 **Guangzhou City**
 **Guangdong 510663 (CN)**
• **LIU, Mengtao**
 **Guangzhou City**
 **Guangdong 510663 (CN)**

• **WANG, Rongqiu**
 **Guangzhou City**
 **Guangdong 510663 (CN)**
• **YU, Yuanchao**
 **Guangzhou City**
 **Guangdong 510663 (CN)**
• **WANG, Weifeng**
 **Guangzhou City**
 **Guangdong 510663 (CN)**

(74) Representative: **Dennemeyer & Associates S.A.**
**Postfach 70 04 25**
**81304 München (DE)**

(56) References cited:
EP-A1- 2 631 881          WO-A1-02/073545
CN-A- 101 661 645        CN-A- 102 456 246
CN-A- 105 069 901        DE-A1-102005 009 332
JP-A- 2004 352 399       JP-A- 2004 352 399
JP-A- 2005 231 903       KR-A- 20100 060 996
US-A1- 2009 121 163      US-B1- 6 573 983

**Description**

The present application claims priority to Chinese Patent Application No. 201510594951.0, titled "DETECTION METHOD AND APPARATUS FOR OVERLAPPED NOTES", filed on September 17, 2015 with the State Intellectual Property Office of People's Republic of China, which is incorporated herein by reference in its entirety.

FIELD

The present disclosure relates to the field of financial devices, and in particular to an overlapping bill detection method and an overlapping bill detection device.

BACKGROUND

An overlapping banknote detection capability is an important technical indicator for recognition capabilities of an intelligent banknote detector and a sorter. During banknote counting, banknotes are sometimes overlapped. Although the probability of overlapping banknotes can be reduced by improving a hardware structure, it is impossible to completely prevent the overlapping banknotes. Therefore, it is significant in banknote recognition to accurately detect whether the banknotes are overlapped.

At present, a general overlapping banknote detection method is based on a thickness signal. In the method, a thickness signal of each banknote in a banknote conveying passage is acquired by a thickness sensor, it is determined whether the banknotes are overlapped by determining whether the width and the thickness of the banknote are greater than given thresholds. In the method, high density and accuracy of signals acquired by the thickness sensor are required. The banknote may be erroneously determined as an overlapping banknote in the following cases: the banknote has an attachment (such as being adhered with an adhesive tape), the banknote arcs slightly and the banknote is old and becomes thick.

Document DE 10 2005 009332 A1 discloses a method and a device for checking the separation of banknotes, in which it is determined whether a single banknote or a plurality of banknotes are present, wherein at least three images of a banknote are generated, of which at least two images are combined to form a combined image and the at least third image is compared with the combined image for correspondence, the presence of a single banknote being concluded if the correspondence between the at least third image and the combined image is high, whereas the presence of more than one banknote is concluded if the correspondence is low.

SUMMARY

The invention defines an overlapping bill detection method and an overlapping bill detection device according to claim 1 and 5. With the method and the device, it is solved a problem in existing overlapping bill detection methods that an erroneous determination is caused in the following cases: the banknote has an attachment, the banknote arcs slightly and the banknote is old and becomes thick.

An overlapping bill detection method is provided according to an embodiment of the present disclosure. The method includes:

acquiring front images and back images of to-be-recognized banknotes and transmission images of the front images or the back images;

acquiring front banknote information and back banknote information of the to-be-recognized banknotes based on the front images and the back images and initializing a corresponding local feature attribute window, where the local feature attribute window is a template of a predetermined recognition region containing a feature attribute of a to-be-recognized image;

measuring a coupling degree of the transmission images based on the local feature attribute window to obtain a measurement result; and

determining whether the measurement result meets a preset banknote overlapping condition, determining that the to-be-recognized banknotes are overlapped if the measurement result meets the preset banknote overlapping condition, and determining that the to-be-recognized banknotes are not overlapped if the measurement result does not meet the preset banknote overlapping condition.

Optionally, the step of measuring the coupling degree of the transmission images of the front images and the back images based on the local feature attribute window to obtain the measurement result includes at least one of a first sub-step, a second sub-step and a third sub-step.

Further according to the invention the first subs-step includes:

calculating a tone texture period and a structure texture period corresponding to a region of the transmission image defined by the local feature attribute window, where the tone texture period includes the number of periodical color textures, the number of periods and a length of the period, and the structure texture period includes the number of periodical structure texture features, the number of periods and a length of the period; and

determining whether a difference between the tone texture period and a preset standard value corresponding to the local feature attribute window exceeds a first preset threshold and whether a difference between the structure texture period and the preset standard value corresponding to the local feature attribute window exceeds the first preset threshold, to obtain a first determination result.

The second sub-step includes:

acquiring a texton corresponding to the region of the transmission image defined by the local feature attribute window, where the texton is a texture unit having a specific shape; and

determining whether a difference between the texton and a predetermined standard texton corresponding to the local feature attribute window exceeds a second preset threshold, to obtain a second determination result.

The third sub-step includes:

calculating a texture definition corresponding to the region of the transmission image defined by the local feature attribute window, where the texture definition indicates a blurring degree of a predetermined texture; and

determining whether a difference between the texture definition and a preset standard value corresponding to the local feature attribute window exceeds a third preset threshold, to obtain a third determination result.

According to the invention determining whether the measurement result meets the preset banknote overlapping condition includes:

determining whether any one of the first determination result, the second determination result and the third determination result is positive.

Optionally, before the determining whether any one of the first determination result, the second determination result and the third determination result is positive, the method further includes:

acquiring front denomination and orientation information of the to-be-recognized banknotes based on the front images;

acquiring back denomination and orientation information of the to-be-recognized banknotes based on the back images; and

determining whether the front denomination and orientation information is matched with the back denomination and orientation information according to a preset denomination and orientation rule, to obtain a fourth determination result.

Optionally, before the determining whether any one of the first determination result, the second determination result and the third determination result is positive, the method further includes:

acquiring front image sizes of the to-be-recognized banknotes based on the front images;

acquiring back image sizes of the to-be-recognized banknotes based on the back images; and

determining whether the front image sizes or the back image sizes go beyond a preset standard size range of the to-be-recognized banknotes, to obtain a fifth determination result.

Optionally, before the determining whether any one of the first determination result, the second determination result and the third determination result is positive, the method further includes:

acquiring front light-transmittances of the to-be-recognized banknotes based on the front images;

acquiring back light-transmittances of the to-be-recognized banknotes based on the back images; and

determining whether the front light-transmittances or the back light-transmittances go beyond a preset standard light-transmittance range of the to-be-recognized banknotes, to obtain a sixth determination result.

An overlapping bill detection device is provided according to an embodiment of the present disclosure. The device includes:

a front and back acquisition module configured to acquire front images and back images of to-be-recognized banknotes;

a banknote information acquisition module configured to acquire front banknote information and back banknote information of the to-be-recognized banknotes based on the front images and the back images and initialize a corresponding local feature attribute window, where the local feature attribute window is a template of a predetermined recognition region containing a feature attribute of a to-be-recognized image;

a coupling degree measurement module configured to measure a coupling degree of transmission images of the front images and the back images based on the local feature attribute window to obtain a measurement result;

an overlapping banknote determination module configured to determine whether the measurement result meets a preset banknote overlapping condition;

an overlapping banknote module configured to determine that the to-be-recognized banknotes are overlapped if it is determined by the overlapping banknote determination module that the measurement result meets the preset banknote overlapping condition; and

a non-overlapping banknote module configured to determine that the to-be-recognized banknotes are not overlapped if it is determined by the overlapping banknote determination module that the measurement result does not meet the preset banknote overlapping condition.

Optionally, the coupling degree measurement module includes at least one of a first sub-module, a second sub-module and a third sub-module.

According to the invention the first sub-module includes:

a tone and structure texture unit configured to calculate a tone texture period and a structure texture period corresponding to a region of the transmission image defined by the local feature attribute window, where the tone texture period includes the number of periodical color textures, the number of periods and a length of the period, and the structure texture period includes the number of periodical structure texture features, the number of periods and a length of the period; and

a first determination unit configured to determine whether a difference between the tone texture period and a preset standard value corresponding to the local feature attribute window exceeds a first preset threshold and whether a difference between the structure texture period and the preset standard value corresponding to the local feature attribute window exceeds the first preset threshold, to obtain a first determination result.

The second sub-module includes:

a texton acquisition unit configured to acquire a texton corresponding to the region of the transmission image defined by the local feature attribute window, where the texton is a texture unit having a specific shape; and

a second determination unit configured to determine whether a difference between the texton and a predetermined standard texton corresponding to the local feature attribute window exceeds a second preset threshold, to obtain a second determination result.

The third sub-module includes:

a texture definition acquisition unit configured to calculate a texture definition corresponding to the region of the transmission image defined by the local feature attribute window, where the texture definition indicates a blurring degree of a predetermined texture; and

a third determination unit configured to determine whether a difference between the texture definition and a preset standard value corresponding to the local feature attribute window exceeds a third preset threshold, to obtain a third determination result.

According to the invention the overlapping banknote determination module includes:

an overlapping banknote determination unit configured to determine whether any one of the first determination result, the second determination result and the third determination result is positive.

Optionally, the device further includes at least one of a first module group, a second module group and a third module group.

The first module group includes:

a front information module configured to acquire front denomination and orientation information of the to-be-recognized banknotes based on the front images;
a back information module configured to acquire back denomination and orientation information of the to-be-recognized banknotes based on the back images; and
a denomination and orientation determination module configured to determine whether the front denomination and orientation information is matched with the back denomination and orientation information according to a preset denomination and orientation rule, to obtain a fourth determination result.

The second module group includes:

a front size module configured to acquire front image sizes of the to-be-recognized banknotes based on the front images;
a back size module configured to acquire back image sizes of the to-be-recognized banknotes based on the back images; and
an image size determination module configured to determine whether the front image sizes or the back image sizes go beyond a preset standard size range of the to-be-recognized banknotes, to obtain a fifth determination result.

The third module group includes:

a front light-transmittance module configured to acquire front light-transmittances of the to-be-recognized banknotes based on the front images;
a back light-transmittance module configured to acquire back light-transmittances of the to-be-recognized banknotes based on the back images; and
a light-transmittance determination module configured to determine whether the front light-transmittances or the back light-transmittances go beyond a preset standard light-transmittance range of the to-be-recognized banknotes, to obtain a sixth determination result.

It can be seen from the above technical solutions that, the embodiments of the present disclosure have the following advantages.
In the overlapping bill detection method according to the embodiments of the present disclosure, the coupling degree of the transmission images of the front images or the back images of the to-be-recognized banknotes is measured, and it is determined whether the banknotes are overlapped based on the measurement result. In this way, it is solved the problem in the existing overlapping bill detection methods that an erroneous determination is caused in the following cases: the banknote has an attachment, the banknote arcs slightly and the banknote is old and becomes thick.

BRIEF DESCRIPTION OF THE DRAWINGS

Figure 1 is a flowchart of an overlapping bill detection method according to an embodiment of the present disclosure;

Figure 2 is a flowchart of an overlapping bill detection method according to another embodiment of the present disclosure;

Figures 3a and 3b are schematic diagrams showing a correct denomination and orientation combination according to an embodiment of the present disclosure;

Figures 4a and 4b are schematic diagrams showing a denomination and orientation combination of overlapping banknotes according to an embodiment of the present disclosure;

Figures 5a and 5b are schematic diagrams showing a denomination and orientation combination of overlapping banknotes according to an embodiment of the present disclosure;

Figures 6a and 6b are schematic diagrams showing overlapping banknote sizes according to an embodiment of the present disclosure;

Figure 7 is a schematic diagram showing a comparison in a tone texture period according to an embodiment of the present disclosure;

Figures 8a and 8b are schematic diagrams showing a comparison in a structure texture period according to an embodiment of the present disclosure;

Figures 9a and 9b are schematic diagrams showing a comparison in a texton according to an embodiment of the present disclosure;

Figures 10a and 10b are schematic diagrams showing a comparison in a texture definition according to an embodiment of the present disclosure;

Figure 11 is a structural diagram of an overlapping bill detection device according to an embodiment of the present disclosure; and

Figure 12 is a structural diagram of an overlapping bill detection device according to another embodiment of the present disclosure.

## DETAILED DESCRIPTION OF EMBODIMENTS

An overlapping bill detection method and an overlapping bill detection device are provided according to embodiments of the present disclosure. With the method and the device, it is solved the problem in the existing overlapping bill detection methods that an erroneous determination is caused in the following cases: the banknote has an attachment, the banknote arcs slightly and the banknote is old and becomes thick.

In order to make the objectives, features and advantages of the present disclosure more apparent and easier to be understood, the technical solutions according to the embodiments of the present disclosure will be described clearly and completely as follows in conjunction with the drawings in the embodiments of the present disclosure. It is apparent that the described embodiments are only a few rather than all of the embodiments according to the present disclosure. Any other embodiments obtained by those skilled in the art based on the embodiments in the present disclosure without any creative work fall in the protection scope of the present disclosure.

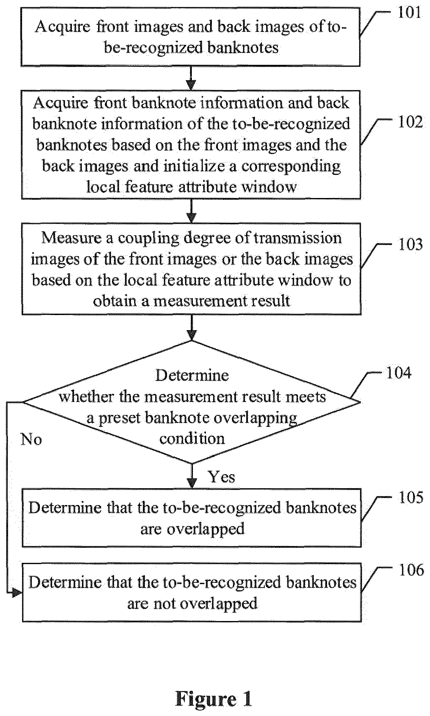

Referring to Figure 1, an overlapping bill detection method according to an embodiment of the present disclosure includes steps 101 to 106.

In step 101, front images and back images of to-be-recognized banknotes and transmission images of the front images or the back images are acquired.

Firstly, the front images and the back images of the to-be-recognized banknotes and the transmission images of the front images or the back images may be acquired.

In step 102, front banknote information and back banknote information of the to-be-recognized banknotes are acquired based on the front images and the back images, and a corresponding local feature attribute window is initialized.

After the front images and the back images of the to-be-recognized banknotes are acquired, the front banknote information and back banknote information of the to-be-recognized banknotes may be acquired based on the front images and the back images, and the corresponding local feature attribute window is initialized. The local feature attribute window is a template of a predetermined recognition region containing a feature attribute of a to-be-recognized image.

In step 103, a coupling degree of the transmission images is measured based on the local feature attribute window to obtain a measurement result.

After the local feature attribute window is initialized, the coupling degree of the transmission images of the front images or the back images may be measured based on the local feature attribute window, to obtain the measurement result.

In step 104, it is determined whether the measurement result meets a preset banknote overlapping condition. Step 105 is performed if the measurement result meets the preset banknote overlapping condition, and step 106 is performed if the measurement result does not meet the preset banknote overlapping condition.

After the measurement result is obtained, it may be determined whether the measurement result meets the preset banknote overlapping condition. Step 105 is performed if the measurement result meets the preset banknote overlapping condition, and step 106 is performed if the measurement result does not meet the preset banknote overlapping condition.

In step 105, it is determined that the to-be-recognized banknotes are overlapped.

The to-be-recognized banknotes may be determined to be overlapped if the measurement result meets the preset banknote overlapping condition.

In step 106, it is determined that the to-be-recognized banknotes are not overlapped.

The to-be-recognized banknotes may be determined not to be overlapped if the measurement result does not meet the preset banknote overlapping condition.

In the embodiment, the aforementioned overlapping bill detection method includes the following steps. Firstly, the front images and the back images of the to-be-recognized banknotes, and the transmission images of the front images or the back images are acquired. Next, the front banknote information and the back banknote information of the to-be-recognized banknotes are acquired based on the front images and the back images, and the corresponding local feature attribute window is initialized. The local feature attribute window is a template of a predetermined recognition region containing a feature attribute of the to-be-recognized image. Then, the coupling degree of the transmission images is measured based on the local feature attribute window to obtain a measurement result. Finally, it is determined whether the measurement result meets the preset banknote overlapping condition. If the measurement result meets the preset banknote overlapping condition, the to-be-recognized banknotes are overlapped. If the measurement result does not meet the preset banknote overlapping condition, the to-be-recognized banknotes are not overlapped. In the overlapping bill detection method according to the embodiment, the coupling degree of the transmission images of the front images or the back images of the to-be-recognized banknotes is measured and it is determined whether the to-be-recognized banknotes are overlapped based on the measurement result. In this case, it is solved the problem in the existing overlapping bill detection methods that an erroneous determination is caused in the following cases: the banknote has an attachment, the banknote arcs slightly and the banknote is old and becomes thick.

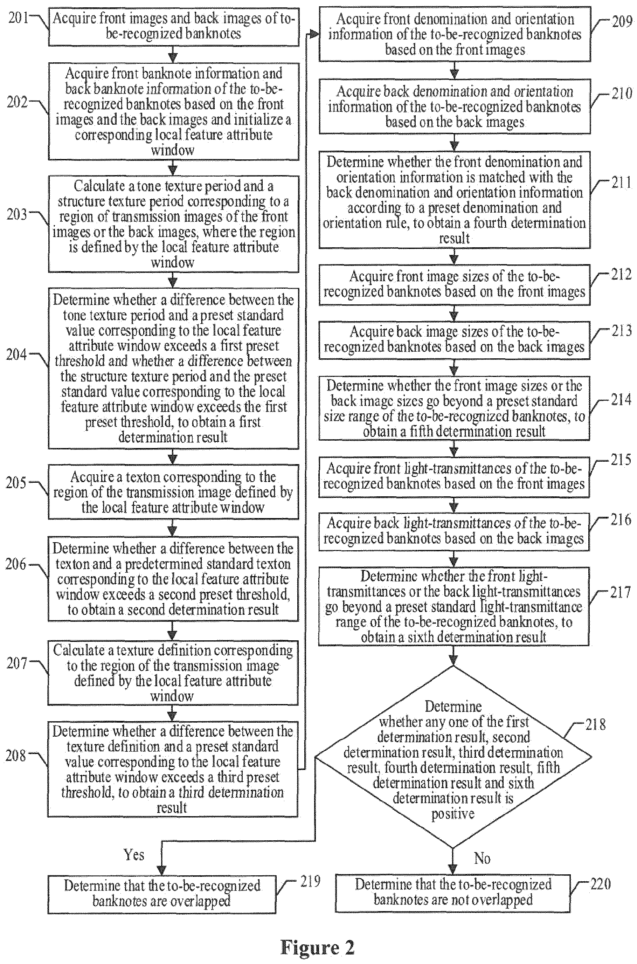

For facilitating understanding, an overlapping bill detection method according to an embodiment of the present disclosure is described in detail below. Referring to Figure 2, an overlapping bill detection method according to another embodiment of the present disclosure includes steps 201 to 220.

In step 201, front images and back images of to-be-recognized banknotes and transmission images of the front images or the back images are acquired.

Firstly, the front images and the back images of the to-be-recognized banknotes and the transmission images of the front images or the back images are acquired.

In step 202, front banknote information and back banknote information of the to-be-recognized banknotes are acquired based on the front images and the back images, and a corresponding local feature attribute window is initialized.

After the front images and back images of the to-be-recognized banknotes are acquired, the front banknote information and back banknote information of the to-be-recognized banknotes may be acquired based on the front images and the back images, and the corresponding local feature attribute window is initialized. The local feature attribute window is a template of a predetermined recognition region containing a feature attribute of the to-be-recognized image.

It can be understood that, the local feature attribute window is predefined according to a rule that different banknotes correspond to different local feature attribute windows. The local feature attribute window is used for rapidly positioning, on the image of the banknote, a region for which specific feature information is to be acquired. Therefore, in the embodiment, the front banknote information and the back banknote information corresponding to the front images and the back images can be acquired. For example, if the banknote information is denomination, a local feature attribute window corresponding to the front image can be acquired, a local feature attribute window corresponding to the back image can be acquired, and these local feature attribute windows are initialized.

In step 203, a tone texture period and a structure texture period corresponding to a region of the transmission image of the front image or the back image are calculated, and the region is defined by the local feature attribute window.

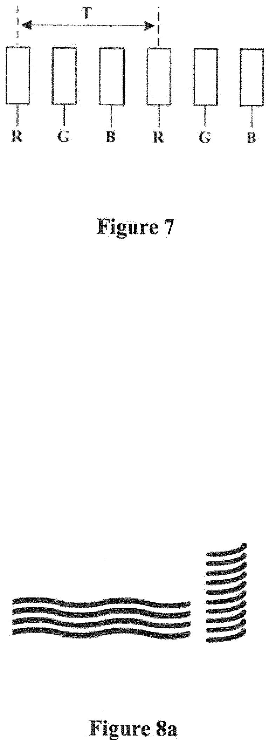

After the local feature attribute window is initialized, the tone texture period and the structure texture period corresponding to the region of the transmission image of the front image or the back image may be calculated, and the region is defined by the local feature attribute window. It can be understood that, the tone texture period includes the number of periodical color textures, the number of periods and a length of the period. As shown in Figure 7, letters R, G and B respectively represent texture colors, the number of tone periodical textures is three, the number of periods is one and the length of the periods is T. The structure texture period includes the number of periodical structure texture features, the number of periods and a length of the period. As shown in Figure 8a, the number of structure textures is two, the numbers of periods are respectively three and nine, and the lengths of the periods are respectively $T_1$ and $T_2$.

It should be noted that, two banknotes cannot seamlessly coincide with each other due to factors such as print accuracy, differences in mediums and sizes, and motion. Therefore, it can be determined whether the to-be-recognized banknotes re overlapped based on a difference between the tone texture period of the banknote and a standard value and a difference between the structure texture period of the banknote and the standard value. The process is described in detail in step 204.

In step 204, it is determined whether a difference between the tone texture period and a preset standard value corresponding to the local feature attribute window exceeds a first preset threshold and whether a difference between the structure texture period and the preset standard value corresponding to the local feature attribute window exceeds the first preset threshold, to obtain a first determination result.

After the tone texture period and the structure texture period corresponding to the region of the transmission image of the front image or the back image defined by the local feature attribute window are calculated, it may be determined whether the difference between the tone texture period and the preset standard value corresponding to the local feature attribute window exceeds the first preset threshold and whether the difference between the structure texture period and the preset standard value corresponding to the local feature attribute window exceeds the first preset threshold, to obtain the first determination result.

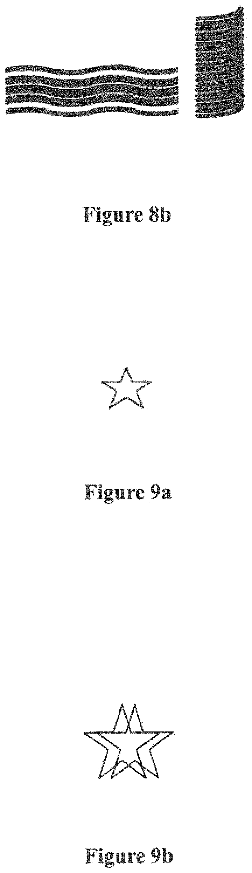

It can be understood that, the standard value corresponding to the local feature attribute window is preset. The standard value includes standard values of the tone texture period and the structure texture period. The difference between the tone texture period and the standard value and the difference between the structure texture period and the standard value are calculated. If the differences exceed the first preset threshold, it can be determined that the tone texture period and the structure texture period of the to-be-recognized image are not in a normal range, and the to-be-recognized image is determined to be overlapping banknotes. For example, Figure 8a shows a standard texture, Figure 8b shows a texture in the case of two overlapping banknotes, and it can be seen that a large difference exists between the period in Figure 8b and the standard value.

In step 205, a texton corresponding to the region of the transmission image defined by the local feature attribute window is acquired.

After the local feature attribute window is initialized, the texton corresponding to the region of the transmission image defined by the local feature attribute window may be acquired. The texton has a specific shape, as shown in Figure 9a. It can be understood that, a texton corresponding to a region can be easily obtained from the transmission image by means of the local feature attribute window.

In step 206, it is determined whether a difference between the texton and a predetermined standard texton corresponding to the local feature attribute window exceeds a second preset threshold, to obtain a second determination result.

After the texton corresponding to the region of the transmission image defined by the local feature attribute window is acquired, it may be determined whether the difference between the texton and the predetermined standard texton corresponding to the local feature attribute window exceeds the second preset threshold to obtain the second determination result.

It can be understood that, the standard texton corresponding to the local feature attribute window is preset, and is a standard template (or numeric value) for a texton. A difference is obtained by comparing the texton with the standard texton. If the difference exceeds the second preset threshold, it can be determined that the texton of the to-be-recognized image is not in a normal range and the to-be-recognized image is overlapping banknotes. For example, Figure 9a shows a standard texture template and the texton in the transmission image may become a texture shown in Figure 9b in the case of overlapping banknotes.

In step 207, a texture definition corresponding to the region of the transmission image defined by the local feature attribute window is calculated.

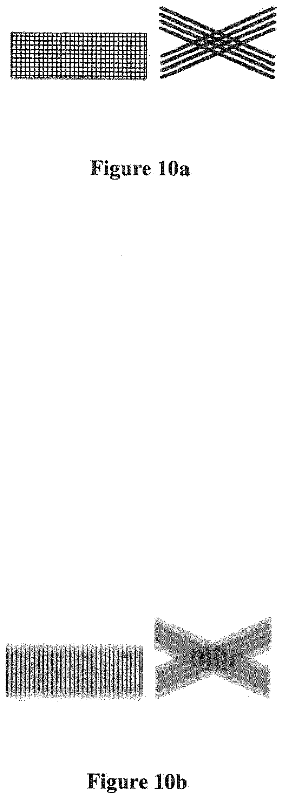

After the local feature attribute window is initialized, the texture definition corresponding to the region of the transmission image defined by the local feature attribute window may be calculated. The texture definition indicates a blurring degree of a predetermined texture, as shown in Figure 10a. It may be understood that, the probability of the occurrence of banknote overlapping is greater as the blurring degree is higher. Conversely, the probability of the occurrence of banknote overlapping is less as the blurring degree is lower.

In step 208, it is determined whether a difference between the texture definition and a preset standard value corresponding to the local feature attribute window exceeds a third preset threshold, to obtain a third determination result.

After the texture definition corresponding to the region of the transmission image defined by the local feature attribute window is calculated, it may be determined whether the difference between the texture definition and the preset standard value corresponding to the local feature attribute window exceeds the third preset threshold, to obtain the third determination result.

It may be understood that, the standard value corresponding to the local feature attribute window is preset. The standard value is a standard numeric value for a texture definition. The difference between the texture definition and the standard value is calculated. If the difference exceeds the third preset threshold, it can be determined that the texture definition of the to-be-recognized image is not in a normal range, and the to-be-recognized image is overlapping banknotes. For example, Figure 10a shows a clear texture, and Figure 10b shows a blurred texture in the case of overlapping banknotes.

In step 209, front denomination and orientation information of the to-be-recognized banknotes is acquired based on the front image.

After the front image is acquired, the front denomination and orientation information of the to-be-recognized banknotes may be acquired based on the front image. It should be noted that, the front denomination and orientation information includes the denomination and the orientation of the front image. The denomination indicates a currency value of the banknote while the orientation indicates an orientation of a front side of the to-be-recognized banknote (placed forward or reversely) when the front image is formed.

In step 210, back denomination and orientation information of the to-be-recognized banknotes is acquired based on the back images.

Similarly, after the front images are acquired, the back denomination and orientation information of the to-be-recognized banknotes may be acquired based on the back images.

In step 211, it is determined whether the front denomination and orientation information is matched with the back denomination and orientation information according to a preset denomination and orientation rule, to obtain a fourth determination result.

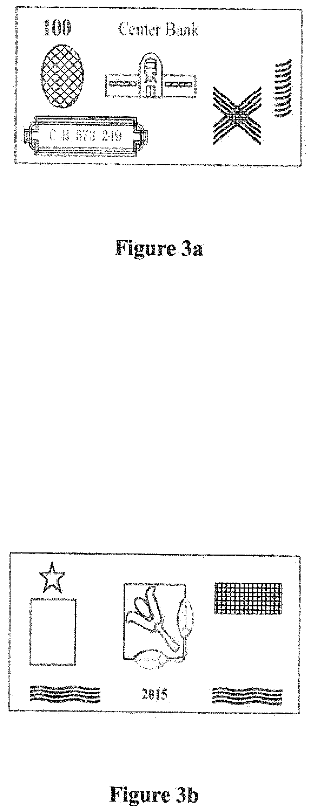

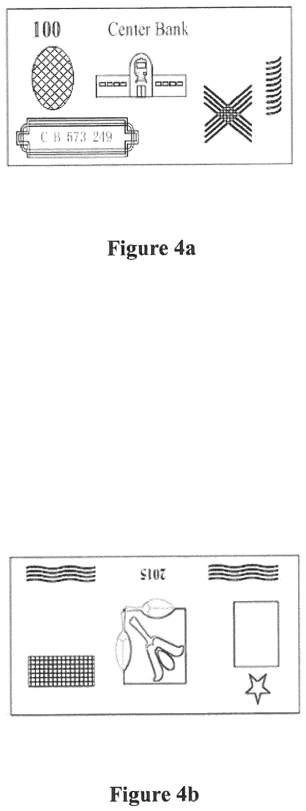

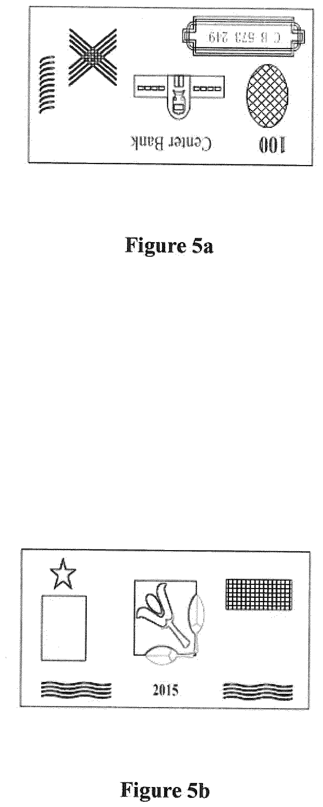

After the front denomination and orientation information and the back denomination and orientation information are acquired, it is determined whether the front denomination and orientation information is matched with the back denomination and orientation information according to the preset denomination and orientation rule, to obtain the fourth determination result. It can be understood that, if the front denomination and orientation information cannot be matched with the back denomination and orientation information according to prior knowledge, it is determined that the to-be-recognized banknotes are overlapped. For example, Figures 3a and 3b show a correct combination, and the above matching fails if combinations similar to that shown in Figures 4a and 4b and that shown in Figures 5a and 5b occur.

In step 212, front image sizes of the to-be-recognized banknotes are acquired based on the front images.

After the front images are acquired, the front image sizes of the to-be-recognized banknotes may be acquired based on the front images.

In step 213, back image sizes of the to-be-recognized banknotes are acquired based on the back images,

After the front images are acquired, the back image sizes of the to-be-recognized banknotes may be acquired based on the back images.

In step 214, it is determined whether the front image sizes or the back image sizes go beyond a preset standard size range of the to-be-recognized banknotes, to obtain a fifth determination result.

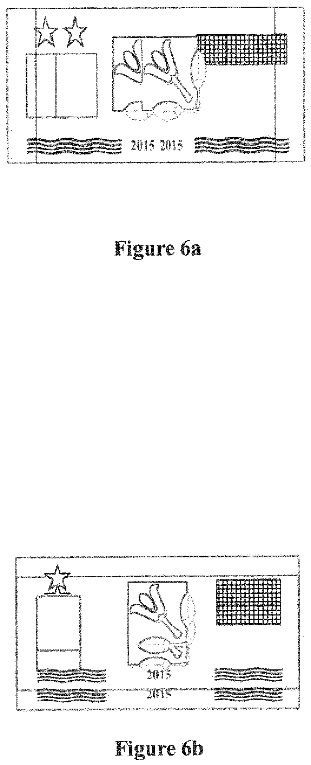

After the front image sizes and the back image sizes are acquired, it may be determined whether the front image sizes or the back image sizes go beyond the preset standard size range of the to-be-recognized banknotes, to obtain the fifth determination result. The front image sizes and the back image sizes include image height information and image width information. It can be understood that, as shown in Figures 6a and 6b, in the case that two banknotes are overlapped, i.e., are adhered in a misalignment manner, the acquired banknote sizes may go beyond the preset standard size range.

In step 215, front light-transmittances of the to-be-recognized banknotes are acquired based on the front images.

After the front images are acquired, the front light-transmittances of the to-be-recognized banknotes may be acquired based on the front images.

In step 216, back light-transmittances of the to-be-recognized banknotes are acquired based on the back images.

After the front images are acquired, the back light-transmittances of the to-be-recognized banknotes may be acquired based on the back images.

In step 217, it is determined whether the front light-transmittances or the back light-transmittances go beyond a preset standard light-transmittance range of the to-be-recognized banknotes, to obtain a sixth determination result.

After the front light-transmittances and the back light-transmittances are acquired, it may be determined whether the front light-transmittances or the back light-transmittances go beyond the preset standard light-transmittance range of the to-be-recognized banknotes, to obtain the sixth determination result.

It should be noted that, the light-transmittance includes a grayscale average value Gf of a reflection image, a grayscale average value Gt of a transmission image and a grayscale correlation Rft between the reflection image and the transmission image. Rft may be represented as a combination of Gf and Gt, as shown in equation (1). Gf and Gt may indicate a grayscale average value of an entire image, or may indicate a grayscale average value of a part of the image. For example, a grayscale average value of a watermark region in the case of overlapping banknotes may approach to a maximum value which is higher than a normal grayscale value by tens of grayscale levels. If the obtained light-transmittance goes beyond the preset standard light-transmittance range of the to-be-recognized banknotes, it is determined that the to-be-recognized banknotes are overlapped. The standard light-transmittance range is a preset standard range for the light-transmittance of the to-be-recognized banknotes.

$$R_{ft} = \alpha(G_f / G_t) + \beta(G_f \pm G_t); \qquad (\alpha \in R, \beta \in R) \qquad (1)$$

In which, $\alpha$ and $\beta$ represent weight parameters, and R represents a real number domain.

In step 218, it is determined whether any one of the first determination result, second determination result, third determination result, fourth determination result, fifth determination result and sixth determination result is positive. Step 219 is performed if any one of the determination results is positive, and step 220 is performed if none of the determination results is positive.

After the above first determination result, second determination result, third determination result, fourth determination result, fifth determination result and sixth determination result are obtained, it may be determined whether any one of the determination results is positive. Step 219 is performed if any one of the determination results is positive, and step 220 is performed if none of the determination results is positive. That is to say, the to-be-recognized banknotes can be determined to be overlapped as long as one of the above first determination result, second determination result, third determination result, fourth determination result, fifth determination result and sixth determination result is positive. The to-be-recognized banknotes may be determined not to be overlapped if none of the determination results is negative.

In step 219, the to-be-recognized banknotes are determined to be overlapped.

The to-be-recognized banknotes are determined to be overlapped if any one of the above first determination result, second determination result, third determination result, fourth determination result, fifth determination result and sixth determination result is positive.

In step 220, the to-be-recognized banknotes are determined not to be overlapped.

The to-be-recognized banknotes are determined not to be overlapped if none of the above first determination result, second determination result, third determination result, fourth determination result, fifth determination result and sixth determination result is negative.

It should be noted that, the first determination result is acquired by steps 203 to 204, the second determination result is acquired by steps 205 to 206, the third determination result is acquired by steps 207 to 208, the fourth determination result is acquired by steps 209 to 211, the fifth determination result is acquired by steps 212 to 214, and the third determination result is acquired by steps 215 to 217. In this case, six modules may be provided. The overlapping bill can be detected by combining the six modules or by separately using the six modules. In addition, the six modules may be combined in an arbitrary order without affecting the result of overlapping banknote detection.

In the overlapping bill detection method according to the embodiment, the coupling degree of the transmission images of the front images or the back images of the to-be-recognized banknotes is measured, and it is determined whether the to-be-recognized banknotes are overlapped based on the measurement result. In this case, it is solved the problem in the existing overlapping bill detection methods that an erroneous determination is caused in the following cases: the banknote has an attachment, the banknote arcs slightly and the banknote is old and becomes thick.

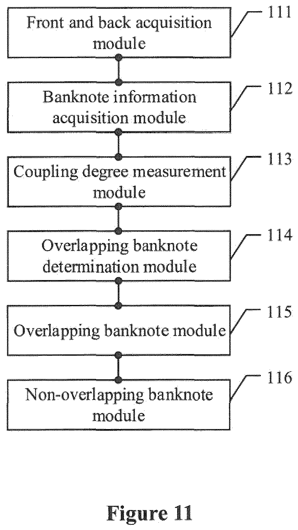

The overlapping bill detection method is described above, and an overlapping bill detection device is described in detail below. Reference is made to Figure 11, and an overlapping bill detection device according to an embodiment of the present disclosure includes: a front and back acquisition module 111, a banknote information acquisition module 112, a coupling degree measurement module 113, an overlapping banknote determination module 114, an overlapping banknote module 115 and a non-overlapping banknote module 116.

The front and back acquisition module 111 is configured to acquire front images and back images of to-be-recognized banknotes.

The banknote information acquisition module 112 is configured to acquire front banknote information and back banknote information of the to-be-recognized banknotes based on the front images and the back images and initialize a corresponding local feature attribute window. The local feature attribute window is a template of a predetermined recognition region containing a feature attribute of a to-be-recognized image.

The coupling degree measurement module 113 is configured to measure a coupling degree of transmission images of the front images and the back images based on the local feature attribute window to obtain a measurement result.

The overlapping banknote determination module 114 is configured to determine whether the measurement result meets a preset banknote overlapping condition.

The overlapping banknote module 115 is configured to determine that the to-be-recognized banknotes are overlapped if it is determined by the overlapping banknote determination module 114 that the measurement result meets the preset banknote overlapping condition.

The non-overlapping banknote module 116 is configured to determine that the to-be-recognized banknotes are not overlapped if it is determined by the overlapping banknote determination module 114 that the measurement result does not meet the preset banknote overlapping condition.

In the embodiment, the front and back acquisition module 111 is configured to acquire the front images and the back images of the to-be-recognized banknotes. The banknote information acquisition module 112 is configured to acquire the front banknote information and the back banknote information of the to-be-recognized banknotes based on the front images and the back images and initialize a corresponding local feature attribute window. The local feature attribute window is a template of a predetermined recognition region containing a feature attribute of the to-be-recognized image. The coupling degree measurement module 113 is configured to measure the coupling degree of the transmission images of the front images and the back images based on the local feature attribute window to obtain the measurement result. The overlapping banknote determination module 114 is configured to determine whether the measurement result meets the preset banknote overlapping condition. The overlapping banknote module 115 is configured to determine that the to-be-recognized banknotes are overlapped if it is determined by the overlapping banknote determination module 114 that the measurement result meets the preset banknote overlapping condition. The non-overlapping banknote module 116 is configured to determine that the to-be-recognized banknotes are not overlapped if it is determined by the overlapping banknote determination module 114 that the measurement result does not meet the preset banknote overlapping condition. In the overlapping bill detection device according to the embodiment, the coupling degree of the transmission images of the front images or the back images of the to-be-recognized banknotes is measured, and it is determined whether the to-be-recognized banknotes are overlapped based on the measurement result. In this case, it is solved the problem in the existing overlapping bill detection methods that an erroneous determination is caused in the following cases: the banknote has an attachment, the banknote arcs slightly and the banknote is old and becomes thick.

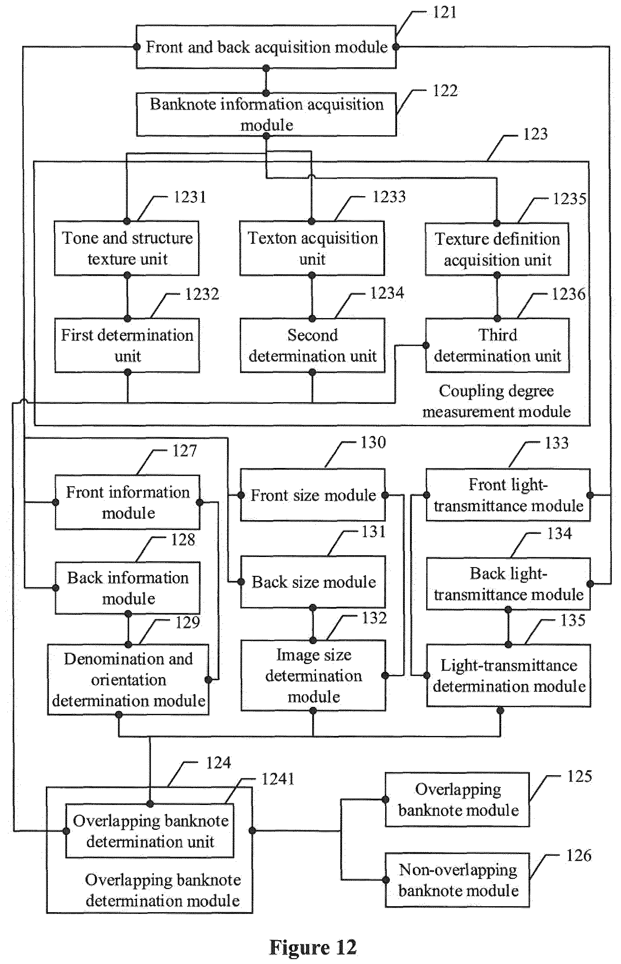

For facilitating understanding, an overlapping bill detection device according to an embodiment of the present disclosure is described in detail hereinafter. Referring to Figure 12, the overlapping bill detection device according to another embodiment of the present disclosure includes: a front and back acquisition module 121, a banknote information acquisition module 122, a coupling degree measurement module 123, an overlapping banknote determination module 124, an overlapping banknote module 125 and a non-overlapping banknote module 126.

The front and back acquisition module 121 is configured to acquire front images and back images of to-be-recognized banknotes.

The banknote information acquisition module 122 is configured to acquire front banknote information and back banknote information of the to-be-recognized banknotes based on the front images and the back images and initialize a corresponding local feature attribute window. The local feature attribute window is a template of a predetermined recognition region containing a feature attribute of a to-be-recognized image.

The coupling degree measurement module 123 is configured to measure a coupling degree of transmission images of the front images and the back images based on the local feature attribute window to obtain a measurement result.

The overlapping banknote determination module 124 is configured to determine whether the measurement result meets a preset banknote overlapping condition.

The overlapping banknote module 125 is configured to determine that the to-be-recognized banknotes are overlapped if it is determined by the overlapping banknote determination module 124 that the measurement result meets the preset banknote overlapping condition.

The non-overlapping banknote module 126 is configured to determine that the to-be-recognized banknotes are not overlapped if it is determined by the overlapping banknote determination module 124 that the measurement result does not meet the preset banknote overlapping condition.

The coupling degree measurement module 123 according to the embodiment may include at least one of a first sub-module, a second sub-module and a third sub-module. The first sub-module includes a tone and structure texture unit 1231 and a first determination unit 1232. The second sub-module includes a texton acquisition unit 1233 and a second determination unit 1234. The third sub-module includes a texture definition acquisition unit 1235 and a third determination unit 1236.

The tone and structure texture unit 1231 is configured to calculate a tone texture period and a structure texture period corresponding to a region of the transmission image defined by the local feature attribute window. The tone texture period includes the number of periodical color textures, the number of periods and a length of the period. The structure texture period includes the number of periodical structure texture features, the number of periods and a length of the period.

The first determination unit 1232 is configured to determine whether a difference between the tone texture period and a preset standard value corresponding to the local feature attribute window exceeds a first preset threshold and whether a difference between the structure texture period and the preset standard value corresponding to the local feature attribute window exceeds the first preset threshold, to obtain a first determination result.

The texton acquisition unit 1233 is configured to acquire a texton corresponding to the region of the transmission image defined by the local feature attribute window. The texton is a texture unit having a specific shape.

The second determination unit 1234 is configured to determine whether a difference between the texton and a predetermined standard texton corresponding to the local feature attribute window exceeds a second preset threshold, to obtain a second determination result.

The texture definition acquisition unit 1235 is configured to calculate a texture definition corresponding to the region of the transmission image defined by the local feature attribute window. The texture definition indicates a blurring degree of a predetermined texture.

The third determination unit 1236 is configured to determine whether a difference between the texture definition and a preset standard value corresponding to the local feature attribute window exceeds a third preset threshold, to obtain a third determination result.

The overlapping banknote determination module 124 according to the embodiment includes an overlapping banknote determination unit 1241.

The overlapping banknote determination unit 1241 is configured to determine whether any one of the first determination result, the second determination result and the third determination result is positive.

The overlapping bill detection device according to the embodiment may further include at least one of a first module group, a second module group and a third module group. The first module group includes a front information module 127, a back information module 128 and a denomination and orientation determination module 129. The second module group includes a front size module 130, a back size module 131 and an image size determination module 132. The third module group includes a front light-transmittance module 133, a back light-transmittance module 134 and a light-transmittance determination module 135.

The front information module 127 is configured to acquire front denomination and orientation information of the to-be-recognized banknotes based on the front images.

The back information module 128 is configured to acquire back denomination and orientation information of the to-be-recognized banknotes based on the back images.

The denomination and orientation determination module 129 is configured to determine whether the front denomination and orientation information is matched with the back denomination and orientation information according to a preset denomination and orientation rule, to obtain a fourth determination result.

The front size module 130 is configured to acquire front image sizes of the to-be-recognized banknotes based on the front images.

The back size module 131 is configured to acquire back image sizes of the to-be-recognized banknotes based on the back images.

The image size determination module 132 is configured to determine whether the front image sizes or the back image sizes go beyond a preset standard size range of the to-be-recognized banknotes, to obtain a fifth determination result.

The front light-transmittance module 133 is configured to acquire front light-transmittances of the to-be-recognized banknotes based on the front images.

The back light-transmittance module 134 is configured to acquire back light-transmittances of the to-be-recognized banknotes based on the back images.

The light-transmittance determination module 135 is configured to determine whether the front light-transmittances or the back light-transmittances go beyond a preset standard light-transmittance range of the to-be-recognized banknotes, to obtain a sixth determination result.

It should be noted that, the first determination result is acquired by the above units 1231 and 1232, the second determination result is acquired by the above units 1233 and 1234, the third determination result is acquired by the above units 1235 and 1236, the fourth determination result is acquired by the above modules 127, 128 and 129, the fifth determination result is acquired by the above modules 130, 131 and 132, and the third determination result is acquired by the above modules 133, 134 and 135. Therefore, the above components may be grouped into six groups. The overlapping bills can be detected by combining the six groups or by using the six groups separately. In addition, the six groups may be combined in an arbitrary order, without affecting the result of overlapping banknote detection.

It may be clearly understood by those skilled in the art that, for ease of describing and for simplicity, for an operating process of the system, the device and the unit described above, one may refer to the process in the above method embodiment, which is not described herein any more.

In several embodiments according to the present disclosure, it should be understood that the disclosed system, device and method can be implemented in other ways. The device embodiments described above are merely schematic. For example, the division of the units is merely a logic functional division, and there may be other divisions in practice. For example, multiple units or components can be combined, or can be integrated into another system, or some features may be ignored, or not be executed. In addition, the coupling, direct coupling or communication connection between components which are shown or discussed may be indirect coupling or communication connection via some interfaces, devices or units, which may be electrical, mechanical, or in other form.

The units illustrated as separate components may be or may not be separated physically, and the component displayed as a unit may be or may not be a physical unit. That is, the components may be located at the same place, or may be distributed on multiple network units. Some or all of the units may be selected, as required, to realize the object of the solution of the embodiment.

In addition, function units according to embodiments of the present disclosure may be integrated into one processing unit, or the units are physically independent from each other, or two or more units are integrated into one unit. The integrated unit described above may be realized in a hardware way, or may be realized by a software function unit.

The integrated unit may be stored in a computer readable storage medium if the integrated unit is implemented in a software function unit and sold or used as an independent product. Base on such understanding, the essential part of the technical solution of the present disclosure or the part of the technical solution of the present disclosure contributing to the conventional technology or all or a part of the technical solution may be embodied as a software product. The computer software product is stored in a storage medium, which includes several instructions to make a computer device (which may be a personal computer, a server, a network device or the like) execute all or a part of steps of the method according to embodiments of the present disclosure. The storage medium described above includes various mediums which can store program codes, such as a USB disk, a mobile hard disk, a read-only memory (ROM), a random access memory (RAM), a disk and a compact disc.

In summary, the above embodiments are only for illustrating the technical solutions of the present disclosure, and are not intended to limit the present disclosure. The present disclosure is described in detail by referring to the aforementioned embodiments. It should be understood by those skilled in the art that, modifications can be made to the technical solutions described in the aforementioned embodiments, or equivalent replacements can be made to a portion of technical features of the technical solutions, as long as the modifications and equivalent replacements do not depart from the spirit and scope of the technical solutions according to the embodiments of the present disclosure.

**Claims**

1. An overlapping bill detection method, comprising:

   acquiring front images and back images of to-be-recognized banknotes and transmission images of the front images or the back images;
   acquiring front banknote information and back banknote information of the to-be-recognized banknotes based on the front images and the back images and initializing a corresponding local feature attribute window, wherein the local feature attribute window is a template of a predetermined recognition region containing a feature attribute of a to-be-recognized image;
   measuring a coupling degree of the transmission images based on the local feature attribute window to obtain a measurement result; and
   determining whether the measurement result meets a preset banknote overlapping condition, determining that the to-be-recognized banknotes are overlapped if the measurement result meets the preset banknote overlapping condition, and determining that the to-be-recognized banknotes are not overlapped if the measurement result does not meet the preset banknote overlapping condition,
   wherein measuring the coupling degree of the transmission images of the front images or the back images based on the local feature attribute window to obtain the measurement result comprises at least one of the following sub-steps:

      a first sub-step, comprising:

         calculating a tone texture period and a structure texture period corresponding to a region of the transmission image defined by the local feature attribute window, wherein the tone texture period comprises the number of periodical color textures, the number of periods and a length of the period, and the structure texture period comprises the number of periodical structure texture features, the number of periods and a length of the period; and
         determining whether a difference between the tone texture period and a preset standard value corresponding to the local feature attribute window exceeds a first preset threshold and whether a difference between the structure texture period and the preset standard value corresponding to the local feature attribute window exceeds the first preset threshold, to obtain a first determination result;

      a second sub-step, comprising

         acquiring a texton corresponding to the region of the transmission image defined by the local feature attribute window, wherein the texton is a texture unit having a specific shape; and
         determining whether a difference between the texton and a predetermined standard texton corresponding to the local feature attribute window exceeds a second preset threshold, to obtain a second determination result; and

      a third sub-step, comprising:

         calculating a texture definition corresponding to the region of the transmission image defined by the local feature attribute window, wherein the texture definition indicates a blurring degree of a predetermined texture; and
         determining whether a difference between the texture definition and a preset standard value corresponding to the local feature attribute window exceeds a third preset threshold, to obtain a third determination result;

   wherein determining whether the measurement result meets the preset banknote overlapping condition comprises:

determining whether any one of the first determination result, the second determination result and the third determination result is positive.

2. The method according to claim 1, wherein before the determining whether any one of the first determination result, the second determination result and the third determination result is positive, the method further comprises:

acquiring front denomination and orientation information of the to-be-recognized banknotes based on the front images;

acquiring back denomination and orientation information of the to-be-recognized banknotes based on the back images; and

determining whether the front denomination and orientation information is matched with the back denomination and orientation information according to a preset denomination and orientation rule, to obtain a fourth determination result.

3. The method according to claim 1, wherein before the determining whether any one of the first determination result, the second determination result and the third determination result is positive, the method further comprises:

acquiring front image sizes of the to-be-recognized banknotes based on the front images;

acquiring back image sizes of the to-be-recognized banknotes based on the back images; and

determining whether the front image sizes or the back image sizes go beyond a preset standard size range of the to-be-recognized banknotes, to obtain a fifth determination result.

4. The method according to claim 1, wherein before the determining whether any one of the first determination result, the second determination result and the third determination result is positive, the method further comprises:

acquiring front light-transmittances of the to-be-recognized banknotes based on the front images;

acquiring back light-transmittances of the to-be-recognized banknotes based on the back images; and

determining whether the front light-transmittances or the back light-transmittances go beyond a preset standard light-transmittance range of the to-be-recognized banknotes, to obtain a sixth determination result.

5. An overlapping bill detection device, comprising:

a front and back acquisition module configured to acquire front images and back images of to-be-recognized banknotes;

a banknote information acquisition module configured to acquire front banknote information and back banknote information of the to-be-recognized banknotes based on the front images and the back images and initialize a corresponding local feature attribute window, wherein the local feature attribute window is a template of a predetermined recognition region containing a feature attribute of a to-be-recognized image;

a coupling degree measurement module configured to measure a coupling degree of transmission images of the front images or the back images based on the local feature attribute window to obtain a measurement result;

an overlapping banknote determination module configured to determine whether the measurement result meets a preset banknote overlapping condition;

an overlapping banknote module configured to determine that the to-be-recognized banknotes are overlapped if it is determined by the overlapping banknote determination module that the measurement result meets the preset banknote overlapping condition; and

a non-overlapping banknote module configured to determine that the to-be-recognized banknotes are not overlapped if it is determined by the overlapping banknote determination module that the measurement result does not meet the preset banknote overlapping condition,

wherein the coupling degree measurement module comprises at least one of the following sub-modules:

a first sub-module, comprising:

a tone and structure texture unit configured to calculate a tone texture period and a structure texture period corresponding to a region of the transmission image defined by the local feature attribute window, wherein the tone texture period comprises the number of periodical color textures, the number of periods and a length of the period, and the structure texture period comprises the number of periodical structure texture features, the number of periods and a length of the period; and

a first determination unit configured to determine whether a difference between the tone texture period and a preset standard value corresponding to the local feature attribute window exceeds a first preset threshold and whether a difference between the structure texture period and the preset standard value corresponding to the local feature attribute window exceeds the first preset threshold, to obtain a first determination result;

a second sub-module, comprising:

a texton acquisition unit configured to acquire a texton corresponding to the region of the transmission image defined by the local feature attribute window, wherein the texton is a texture unit having a specific shape; and
a second determination unit configured to determine whether a difference between the texton and a predetermined standard texton corresponding to the local feature attribute window exceeds a second preset threshold, to obtain a second determination result; and

a third sub-module, comprising:

a texture definition acquisition unit configured to calculate a texture definition corresponding to the region of the transmission image defined by the local feature attribute window, wherein the texture definition indicates a blurring degree of a predetermined texture; and
a third determination unit configured to determine whether a difference between the texture definition and a preset standard value corresponding to the local feature attribute window exceeds a third preset threshold, to obtain a third determination result;

wherein the overlapping banknote determination module comprises:
an overlapping banknote determination unit configured to determine whether any one of the first determination result, the second determination result and the third determination result is positive.

6. The device according to claim 5, further comprising at least one of the following module groups:

a first module group, comprising:

a front information module configured to acquire front denomination and orientation information of the to-be-recognized banknotes based on the front images;
a back information module configured to acquire back denomination and orientation information of the to-be-recognized banknotes based on the back images; and
a denomination and orientation determination module configured to determine whether the front denomination and orientation information is matched with the back denomination and orientation information according to a preset denomination and orientation rule, to obtain a fourth determination result;

a second module group, comprising:

a front size module configured to acquire front image sizes of the to-be-recognized banknotes based on the front images;
a back size module configured to acquire back image sizes of the to-be-recognized banknotes based on the back images; and
an image size determination module configured to determine whether the front image sizes or the back image sizes go beyond a preset standard size range of the to-be-recognized banknotes, to obtain a fifth determination result; and

a third module group, comprising:

a front light-transmittance module configured to acquire front light-transmittances of the to-be-recognized banknotes based on the front images;
a back light-transmittance module configured to acquire back light-transmittances of the to-be-recognized banknotes based on the back images; and
a light-transmittance determination module configured to determine whether the front light-transmittances or the back light-transmittances go beyond a preset standard light-transmittance range of the to-be-recognized banknotes, to obtain a sixth determination result.

**Patentansprüche**

1. Detektionsverfahren für sich überlappende Geldscheine, umfassend:

   Erfassen von Vorderseitenbildern und Rückseitenbildern von zu erkennenden Banknoten und von Übertragungsbildern der Vorderseitenbilder oder der Rückseitenbilder;
   Erfassen von Vorderseiten-Banknoteninformationen und Rückseiten-Banknoteninformationen der zu erkennenden Banknoten basierend auf den Vorderseitenbildern und den Rückseitenbildern und Initialisieren eines entsprechenden lokalen Merkmalsattributfensters, wobei das lokale Merkmalsattributfenster eine Vorlage eines vorbestimmten Erkennungsbereichs ist, der ein Merkmalsattribut eines zu erkennenden Bildes enthält;
   Messen eines Kopplungsgrades der Übertragungsbilder basierend auf dem lokalen Merkmalsattributfenster, um ein Messergebnis zu erhalten; und
   Bestimmen, ob das Messergebnis eine voreingestellte Bedingung für die Banknotenüberlappung erfüllt, Bestimmen, dass die zu erkennenden Banknoten überlappt sind, wenn das Messergebnis die voreingestellte Bedingung für die Banknotenüberlappung erfüllt, und Bestimmen, dass die zu erkennenden Banknoten nicht überlappt sind, wenn das Messergebnis die voreingestellte Bedingung für die Banknotenüberlappung nicht erfüllt,
   wobei das Messen des Kopplungsgrades der Übertragungsbilder der Vorderseitenbilder oder der Rückseitenbilder basierend auf dem lokalen Merkmalsattributfenster, um das Messergebnis zu erhalten, mindestens einen der folgenden Teilschritte umfasst:

   einen ersten Teilschritt, umfassend:

   Berechnen einer Tontexturperiode und einer Strukturtexturperiode entsprechend einem Bereich des Übertragungsbildes, der durch das lokale Merkmalsattributfenster definiert ist, wobei die Tontexturperiode die Anzahl der periodischen Farbtexturen, die Anzahl der Perioden und eine Länge der Periode umfasst, und die Strukturtexturperiode die Anzahl der periodischen Strukturtexturmerkmale, die Anzahl der Perioden und eine Länge der Periode umfasst; und
   Bestimmen, ob eine Differenz zwischen der Tontexturperiode und einem voreingestellten Standardwert, der dem lokalen Merkmalsattributfenster entspricht, einen ersten voreingestellten Schwellenwert überschreitet, und ob eine Differenz zwischen der Strukturtexturperiode und dem voreingestellten Standardwert, der dem lokalen Merkmalsattributfenster entspricht, den ersten voreingestellten Schwellenwert überschreitet, um ein erstes Bestimmungsergebnis zu erhalten; einen zweiten Teilschritt, umfassend
   Erfassen eines Textons, der dem durch das lokale Merkmalsattributfenster definierten Bereich des Übertragungsbildes entspricht, wobei der Texton eine Textureinheit mit einer spezifischen Form ist; und
   Bestimmen, ob eine Differenz zwischen dem Texton und einem vorbestimmten Standardtexton, der dem lokalen Merkmalsattributfenster entspricht, einen zweiten voreingestellten Schwellenwert überschreitet, um ein zweites Bestimmungsergebnis zu erhalten; und einen dritten Teilschritt, umfassend:
   Berechnen einer Texturdefinition, die dem durch das lokale Merkmalsattributfenster definierten Bereich des Übertragungsbildes entspricht, wobei die Texturdefinition einen Unschärfegrad einer vorbestimmten Textur angibt; und

   Bestimmen, ob eine Differenz zwischen der Texturdefinition und einem voreingestellten Standardwert, der dem lokalen Merkmalsattributfenster entspricht, einen dritten voreingestellten Schwellenwert überschreitet, um ein drittes Bestimmungsergebnis zu erhalten;

   wobei das Bestimmen, ob das Messergebnis die voreingestellte Bedingung für die Banknotenüberlappung erfüllt, Folgendes umfasst:
   Bestimmen, ob irgendeines von dem ersten Bestimmungsergebnis, dem zweiten Bestimmungsergebnis und dem dritten Bestimmungsergebnis positiv ist.

2. Verfahren nach Anspruch 1, wobei das Verfahren vor dem Bestimmen, ob irgendeines von dem ersten Bestimmungsergebnis, dem zweiten Bestimmungsergebnis und dem dritten Bestimmungsergebnis positiv ist, ferner Folgendes umfasst:

Erfassen von Vorderseitennennwert- und -ausrichtungsinformationen der zu erkennenden Banknoten basierend auf den Vorderseitenbildern;
Erfassen von Rückseitennennwert- und -ausrichtungsinformationen der zu erkennenden Banknoten basierend auf den Rückseitenbildern; und
Bestimmen, ob die Vorderseitennennwert- und -ausrichtungsinformationen mit den Rückseitennennwert- und -ausrichtungsinformationen gemäß einer voreingestellten Nennwert- und Ausrichtungsregel übereinstimmen, um ein viertes Bestimmungsergebnis zu erhalten.

3. Verfahren nach Anspruch 1, wobei das Verfahren vor dem Bestimmen, ob irgendeines von dem ersten Bestimmungsergebnis, dem zweiten Bestimmungsergebnis und dem dritten Bestimmungsergebnis positiv ist, ferner Folgendes umfasst:

Erfassen von Vorderseitenbildgrößen der zu erkennenden Banknoten basierend auf den Vorderseitenbildern;
Erfassen von Rückseitenbildgrößen der zu erkennenden Banknoten basierend auf den Rückseitenbildern; und
Bestimmen, ob die Vorderseitenbildgrößen oder die Rückseitenbildgrößen über einen voreingestellten Standardgrößenbereich der zu erkennenden Banknoten hinausgehen, um ein fünftes Bestimmungsergebnis zu erhalten.

4. Verfahren nach Anspruch 1, wobei das Verfahren vor dem Bestimmen, ob irgendeines von dem ersten Bestimmungsergebnis, dem zweiten Bestimmungsergebnis und dem dritten Bestimmungsergebnis positiv ist, ferner Folgendes umfasst:

Erfassen von Vorderseitenlichtdurchlässen der zu erkennenden Banknoten basierend auf den Vorderseitenbildern;
Erfassen von Rückseitenlichtdurchlässen der zu erkennenden Banknoten basierend auf den Rückseitenbildern; und
Bestimmen, ob die Vorderseitenlichtdurchlässe oder die Rückseitenlichtdurchlässe über einen voreingestellten Standardlichtdurchlassbereich der zu erkennenden Banknoten hinausgehen, um ein sechstes Bestimmungsergebnis zu erhalten.

5. Detektionsgerät für sich überlappende Geldscheine, umfassend:

ein Vorderseiten- und Rückseiten-Erfassungsmodul, das so konfiguriert ist, dass es Vorderseitenbilder und Rückseitenbilder von zu erkennenden Banknoten erfasst;
ein Banknoteninformations-Erfassungsmodul, das so konfiguriert ist, dass es basierend auf den Vorderseitenbildern und den Rückseitenbildern Vorderseiten-Banknoteninformationen und Rückseiten-Banknoteninformationen der zu erkennenden Banknoten erfasst und ein entsprechendes lokales Merkmalsattributfenster initialisiert, wobei das lokale Merkmalsattributfenster eine Vorlage eines vorgegebenen Erkennungsbereichs ist, der ein Merkmalsattribut eines zu erkennenden Bildes enthält;
ein Kopplungsgrad-Messmodul, das so konfiguriert ist, dass es einen Kopplungsgrad von Übertragungsbildern der Vorderseitenbilder oder der Rückseitenbilder basierend auf dem lokalen Merkmalsattributfenster misst, um ein Messergebnis zu erhalten;
ein Bestimmungsmodul für sich überlappende Banknoten, das so konfiguriert ist, dass es bestimmt, ob das Messergebnis eine voreingestellte Bedingung für die Banknotenüberlappung erfüllt;
ein Modul für sich überlappende Banknoten, das so konfiguriert ist, dass es bestimmt, dass sich die zu erkennenden Banknoten überlappen, wenn durch das Bestimmungsmodul für sich überlappende Banknoten bestimmt wird, dass das Messergebnis die voreingestellte Bedingung für die Banknotenüberlappung erfüllt; und
ein Bestimmungsmodul für sich nicht überlappende Banknoten, das so konfiguriert ist, dass es bestimmt, dass sich die zu erkennenden Banknoten nicht überlappen, wenn durch das Bestimmungsmodul für sich überlappende Banknoten bestimmt wird, dass das Messergebnis die voreingestellte Bedingung für die Banknoten-Überlappung nicht erfüllt,
wobei das Kopplungsgrad-Messmodul mindestens eines der folgenden Teilmodule umfasst:

ein erstes Teilmodul, umfassend:

eine Ton- und Strukturtextureinheit, die so konfiguriert ist, dass sie eine Tontexturperiode und eine Strukturtexturperiode berechnet, die einem Bereich des Übertragungsbildes entsprechen, der durch das lokale Merkmalsattributfenster definiert ist, wobei die Tontexturperiode die Anzahl der periodischen Farbtexturen, die Anzahl der Perioden und eine Länge der Periode umfasst, und die Strukturtexturperiode die Anzahl der periodischen Strukturtexturmerkmale, die Anzahl der Perioden und eine Länge der Periode umfasst; und

eine erste Bestimmungseinheit, die so konfiguriert ist, dass sie bestimmt, ob eine Differenz zwischen der Tontexturperiode und einem voreingestellten Standardwert, der dem lokalen Merkmalsattributfenster entspricht, einen ersten voreingestellten Schwellenwert überschreitet und ob eine Differenz zwischen der Strukturtexturperiode und dem voreingestellten Standardwert, der dem lokalen Merkmalsattributfenster entspricht, den ersten voreingestellten Schwellenwert überschreitet, um ein erstes Bestimmungsergebnis zu erhalten;

ein zweites Teilmodul, umfassend:

eine Texton-Erfassungseinheit, die so konfiguriert ist, dass sie ein Texton erfasst, das dem Bereich des Übertragungsbildes entspricht, der durch das lokale Merkmalsattributfenster definiert ist, wobei das Texton eine Textureinheit mit einer spezifischen Form ist; und

eine zweite Bestimmungseinheit, die so konfiguriert ist, dass sie bestimmt, ob eine Differenz zwischen dem Texton und einem vorbestimmten Standardtexton, der dem lokalen Merkmalsattributfenster entspricht,
ein zweites voreingestelltes Attributfenster überschreitet, um ein zweites Bestimmungsergebnis zu erhalten; und

ein drittes Teilmodul, umfassend:
eine Texturdefinitions-Erfassungseinheit, die so konfiguriert ist, dass sie eine Texturdefinition berechnet, die dem durch das lokale Merkmalsattributfenster definierten Bereich des Übertragungsbildes entspricht, wobei die Texturdefinition einen Unschärfegrad einer vorbestimmten Textur angibt; und

eine dritte Bestimmungseinheit, die so konfiguriert ist, dass sie bestimmt, ob eine Differenz zwischen der Texturdefinition und einem voreingestellten Standardwert, der dem lokalen Merkmalsattributfenster entspricht, einen dritten voreingestellten Schwellenwert überschreitet, um ein drittes Bestimmungsergebnis zu erhalten;

wobei das Bestimmungsmodul für sich überlappende Banknoten Folgendes umfasst:
eine Bestimmungseinheit für sich überlappende Banknoten, die so konfiguriert ist, dass sie bestimmt, ob das erste Bestimmungsergebnis, das zweite Bestimmungsergebnis oder das dritte Bestimmungsergebnis positiv ist.

6. Gerät nach Anspruch 5, das ferner mindestens eine der folgenden Modulgruppen umfasst:

eine erste Modulgruppe, umfassend:

ein Vorderseiteninformationsmodul, das so konfiguriert ist, dass es Vorderseitennennwert- und -ausrichtungsinformationen der zu erkennenden Banknoten basierend auf den Vorderseitenbildern erfasst;
ein Rückseiteninformationsmodul, das so konfiguriert ist, dass es Rückseitennennwert- und -ausrichtungsinformationen der zu erkennenden Banknoten basierend auf den Rückseitenbildern erfasst; und
ein Nennwert- und Ausrichtungsbestimmungsmodul, das so konfiguriert ist, dass es bestimmt, ob die Vorderseitennennwert- und -ausrichtungsinformationen mit den Rückseitennennwert- und -ausrichtungsinformationen gemäß einer voreingestellten Nennwert- und Ausrichtungsregel übereinstimmen, um ein viertes Bestimmungsergebnis zu erhalten;

eine zweite Modulgruppe, umfassend:

ein Vorderseitengrößenmodul, das so konfiguriert ist, dass es basierend auf den Vorderseitenbildern Vorderseitenbildgrößen der zu erkennenden Banknoten erfasst;
ein Rückseitengrößenmodul, das so konfiguriert ist, dass es basierend auf den Rückseitenbildern Rückseitenbildgrößen der zu erkennenden Banknoten erfasst; und
ein Bildgrößenbestimmungsmodul, das so konfiguriert ist, dass es bestimmt, ob die Vorderseitenbildgrößen oder die Rückseitenbildgrößen über einen voreingestellten Standardgrößenbereich der zu erkennenden Banknoten hinausgehen, um ein fünftes Bestimmungsergebnis zu erhalten; und

eine dritte Modulgruppe, umfassend:

ein Vorderseitenlichtdurchlassmodul, das so konfiguriert ist, dass es Vorderseitenlichtdurchlässe der zu erkennenden Banknoten basierend auf den Vorderseitenbildern erfasst;
ein Rückseitenlichtdurchlassmodul, das so konfiguriert ist, dass es Rückseitenlichtdurchlässe der zu erkennenden Banknoten basierend auf den Rückseitenbildern erfasst; und
ein Lichtdurchlassbestimmungsmodul, das so konfiguriert ist, dass es bestimmt, ob die Vorderseitenlichtdurchlässe oder die Rückseitenlichtdurchlässe über einen voreingestellten Standardlichtdurchlassbereich der zu erkennenden Banknoten hinausgehen, um ein sechstes Bestimmungsergebnis zu erhalten.

**Revendications**

1.  Procédé de détection de billets se chevauchant, comprenant :

    l'acquisition d'images recto et d'images verso de billets de banque à reconnaître et d'images de transmission des images recto ou des images verso ;
    l'acquisition d'informations de billet de banque recto et d'informations de billet de banque verso des billets de banque à reconnaître sur la base des images recto et des images verso et l'initialisation d'une fenêtre d'attributs de caractéristiques locales correspondante, la fenêtre d'attributs de caractéristiques locales étant un modèle d'une région de reconnaissance prédéterminée contenant un attribut de caractéristique d'une image à reconnaître ;
    la mesure d'un degré de couplage des images de transmission sur la base de la fenêtre d'attributs de caractéristiques locales pour obtenir un résultat de mesure ; et
    la détermination pour savoir si le résultat de mesure satisfait une condition de chevauchement de billets de banque prédéfinie, la détermination que les billets de banque à reconnaître se chevauchent si le résultat de mesure satisfait la condition de chevauchement de billets de banque prédéfinie et la détermination que les billets de banque à reconnaître ne se chevauchent pas si le résultat de mesure ne respecte pas la condition de chevauchement de billets de banque prédéfinie,
    dans lequel la mesure du degré de couplage des images de transmission des images recto ou des images verso sur la base de la fenêtre d'attributs de caractéristiques locales pour obtenir le résultat de mesure comprend au moins l'une des sous-étapes suivantes :

    une première sous-étape, comprenant :

    le calcul d'une période de texture de ton et d'une période de texture de structure correspondant à une région de l'image de transmission définie par la fenêtre d'attributs de caractéristiques locales, la période de texture de ton comprenant le nombre de textures de couleur périodiques, le nombre de périodes et une longueur de la période et la période de texture de structure comprenant le nombre de caractéristiques de texture de structure périodiques, le nombre de périodes et une longueur de la période ; et
    la détermination pour savoir si une différence entre la période de texture de ton et une valeur standard prédéfinie correspondant à la fenêtre d'attributs de caractéristiques locales dépasse un premier seuil prédéfini et si une différence entre la période de texture de structure et la valeur standard prédéfinie correspondant à la fenêtre d'attributs de caractéristiques locales dépasse le premier seuil prédéfini, pour obtenir un premier résultat de détermination ; une deuxième sous-étape comprenant
    l'acquisition d'un texton correspondant à la région de l'image de transmission définie par la fenêtre d'attributs de caractéristiques locales, le texton étant une unité de texture ayant une forme spécifique ; et
    la détermination pour savoir si une différence entre le texton et un texton standard prédéterminé correspondant à la fenêtre d'attributs de caractéristiques locales dépasse un deuxième seuil prédéfini, pour obtenir un deuxième résultat de détermination ; et une troisième sous-étape comprenant :
    le calcul d'une définition de texture correspondant à la région de l'image de transmission définie par la fenêtre d'attributs de caractéristiques locales, la définition de texture indiquant un degré de flou d'une texture prédéterminée ; et

    la détermination pour savoir si une différence entre la définition de texture et une valeur standard prédéfinie correspondant à la fenêtre d'attributs de caractéristiques locales dépasse un troisième seuil prédéfini, pour obtenir un troisième résultat de détermination ;

    dans lequel la détermination pour savoir si le résultat de mesure satisfait la condition de chevauchement de billets de banque prédéfinie comprend :

19

la détermination pour savoir si l'un quelconque résultat parmi le premier résultat de détermination, le deuxième résultat de détermination et le troisième résultat de détermination est positif.

2. Procédé selon la revendication 1, dans lequel, avant de déterminer si l'un quelconque résultat parmi le premier résultat de détermination, le deuxième résultat de détermination et le troisième résultat de détermination est positif, le procédé comprend en outre :

l'acquisition d'informations de dénomination et d'orientation recto des billets de banque à reconnaître sur la base des images recto ;
l'acquisition d'informations de dénomination et d'orientation verso des billets de banque à reconnaître sur la base des images verso ; et
la détermination pour savoir si les informations de dénomination et d'orientation recto sont mises en correspondance avec les informations de dénomination et d'orientation verso selon une règle de dénomination et d'orientation prédéfinie, pour obtenir un quatrième résultat de détermination.

3. Procédé selon la revendication 1, dans lequel, avant de déterminer si l'un quelconque résultat parmi le premier résultat de détermination, le deuxième résultat de détermination et le troisième résultat de détermination est positif, le procédé comprend en outre :

l'acquisition de tailles d'image recto des billets de banque à reconnaître sur la base des images recto ;
l'acquisition de tailles d'image verso des billets de banque à reconnaître sur la base des images verso ; et
la détermination pour savoir si les tailles d'image recto ou les tailles d'image verso vont au-delà d'une plage de tailles standard prédéfinie des billets de banque à reconnaître, pour obtenir un cinquième résultat de détermination.

4. Procédé selon la revendication 1, dans lequel, avant de déterminer si l'un quelconque résultat parmi le premier résultat de détermination, le deuxième résultat de détermination et le troisième résultat de détermination est positif, le procédé comprend en outre :

l'acquisition de transmittances de lumière recto des billets de banque à reconnaître sur la base des images recto ;
l'acquisition de transmittances de lumière verso des billets de banque à reconnaître sur la base des images verso ; et
la détermination pour savoir si les transmittances de lumière recto ou les transmittances de lumière verso vont au-delà d'une plage de transmittances de lumière standard prédéfinie des billets de banque à reconnaître, pour obtenir un sixième résultat de détermination.

5. Dispositif de détection de billets se chevauchant, comprenant :

un module d'acquisition recto et verso, configuré pour acquérir des images recto et des images verso de billets de banque à reconnaître ;
un module d'acquisition d'informations de billet de banque, conçu pour acquérir des informations de billet de banque recto et des informations de billet de banque verso des billets de banque à reconnaître sur la base des images recto et des images verso et initialiser une fenêtre d'attributs de caractéristiques locales correspondante, la fenêtre d'attributs de caractéristiques locales étant un modèle d'une région de reconnaissance prédéterminée contenant un attribut de caractéristique d'une image à reconnaître ;
un module de mesure de degré de couplage, configuré pour mesurer un degré de couplage d'images de transmission des images recto ou des images verso, sur la base de la fenêtre d'attributs de caractéristiques locales pour obtenir un résultat de mesure ;
un module de détermination de billets de banque se chevauchant, conçu pour déterminer si le résultat de mesure satisfait une condition de chevauchement de billets de banque prédéfinie ;
un module de billets de banque se chevauchant, conçu pour déterminer que les billets de banque à reconnaître se chevauchent s'il est déterminé, par le module de détermination de billets de banque se chevauchant, que le résultat de mesure satisfait la condition de chevauchement de billets de banque prédéfinie ; et
un module de billets de banque sans chevauchement, conçu pour déterminer que les billets de banque à reconnaître ne se chevauchent pas s'il est déterminé, par le module de détermination de billets de banque se chevauchant, que le résultat de mesure ne satisfait pas la condition de chevauchement de billets de banque prédéfinie,
dans lequel le module de mesure de degré de couplage comprend au moins l'un des sous-modules suivants :

un premier sous-module comprenant :

une unité de texture de ton et de structure, conçue pour calculer une période de texture de ton et une période de texture de structure correspondant à une région de l'image de transmission définie par la fenêtre d'attributs de caractéristiques locales, la période de texture de ton comprenant le nombre de textures de couleur périodiques, le nombre de périodes et une longueur de la période et la période de texture de structure comprenant le nombre de caractéristiques de texture de structure périodiques, le nombre de périodes et une longueur de la période ; et
une première unité de détermination, conçue pour déterminer si une différence entre la période de texture de ton et une valeur standard prédéfinie correspondant à la fenêtre d'attributs de caractéristiques locales dépasse un premier seuil prédéfini et si une différence entre la période de texture de structure et la valeur standard prédéfinie correspondant à la fenêtre d'attributs de caractéristiques locales dépasse le premier seuil prédéfini, pour obtenir un premier résultat de détermination ;

un deuxième sous-module comprenant :

une unité d'acquisition de texton, conçue pour acquérir un texton correspondant à la région de l'image de transmission définie par la fenêtre d'attributs de caractéristiques locales, le texton étant une unité de texture ayant une forme spécifique ; et
une seconde unité de détermination, conçue pour déterminer si une différence entre le texton et un texton standard prédéterminé correspondant à la fenêtre d'attributs de caractéristiques locales dépasse un deuxième seuil prédéfini, pour obtenir un deuxième résultat de détermination ; et

un troisième sous-module comprenant :
une unité d'acquisition de définition de texture, conçue pour calculer une définition de texture correspondant à la région de l'image de transmission définie par la fenêtre d'attributs de caractéristiques locales, dans lequel la définition de texture indique un degré de flou d'une texture prédéterminée ; et
une troisième unité de détermination, conçue pour déterminer si une différence entre la définition de texture et une valeur standard prédéfinie correspondant à la fenêtre d'attributs de caractéristiques locales dépasse un troisième seuil prédéfini, pour obtenir un troisième résultat de détermination ;

dans lequel le module de détermination de billets de banque se chevauchant comprend :
une unité de détermination de billets de banque se chevauchant, conçue pour déterminer si l'un quelconque résultat parmi le premier résultat de détermination, le deuxième résultat de détermination et le troisième résultat de détermination est positif.

6. Dispositif selon la revendication 5, comprenant en outre au moins l'un des groupes de modules suivants :

un premier groupe de modules comprenant :

un module d'informations recto, conçu pour acquérir des informations de dénomination et d'orientation recto des billets de banque à reconnaître sur la base des images recto ;
un module d'informations verso, conçu pour acquérir des informations de dénomination et d'orientation verso des billets de banque à reconnaître sur la base des images verso ; et
un module de détermination de dénomination et d'orientation, conçu pour déterminer si les informations de dénomination et d'orientation recto sont mises en correspondance avec les informations de dénomination et d'orientation verso selon une règle de dénomination et d'orientation prédéfinie, pour obtenir un quatrième résultat de détermination ;
un deuxième groupe de modules comprenant :

un module de taille recto, conçu pour acquérir des tailles d'image recto des billets de banque à reconnaître sur la base des images recto ;
un module de taille verso, conçu pour acquérir des tailles d'image verso des billets de banque à reconnaître sur la base des images verso ; et
un module de détermination de taille d'image, conçu pour déterminer si les tailles d'image recto ou les tailles d'image verso vont au-delà d'une plage de tailles standard prédéfinie des billets de banque à reconnaître, pour obtenir un cinquième résultat de détermination ; et

un troisième groupe de modules comprenant :

un module de transmittance de lumière recto, conçu pour acquérir des transmittances de lumière recto des billets de banque à reconnaître sur la base des images recto ;

un module de transmittance de lumière verso, conçu pour acquérir des transmittances de lumière verso des billets de banque à reconnaître sur la base des images verso ; et

un module de détermination de transmittance de lumière, conçu pour déterminer si les transmittances de lumière recto ou les transmittances de lumière verso vont au-delà d'une plage de transmittances de lumière standard prédéfinie des billets de banque à reconnaître, pour obtenir un sixième résultat de détermination.

Acquire front images and back images of to-be-recognized banknotes ⟋ 101

Acquire front banknote information and back banknote information of the to-be-recognized banknotes based on the front images and the back images and initialize a corresponding local feature attribute window ⟋ 102

Measure a coupling degree of transmission images of the front images or the back images based on the local feature attribute window to obtain a measurement result ⟋ 103

Determine whether the measurement result meets a preset banknote overlapping condition ⟋ 104

No

Yes

Determine that the to-be-recognized banknotes are overlapped ⟋ 105

Determine that the to-be-recognized banknotes are not overlapped ⟋ 106

**Figure 1**

201 — Acquire front images and back images of to-be-recognized banknotes

Acquire front denomination and orientation information of the to-be-recognized banknotes based on the front images — 209

202 — Acquire front banknote information and back banknote information of the to-be-recognized banknotes based on the front images and the back images and initialize a corresponding local feature attribute window

Acquire back denomination and orientation information of the to-be-recognized banknotes based on the back images — 210

203 — Calculate a tone texture period and a structure texture period corresponding to a region of transmission images of the front images or the back images, where the region is defined by the local feature attribute window

Determine whether the front denomination and orientation information is matched with the back denomination and orientation information according to a preset denomination and orientation rule, to obtain a fourth determination result — 211

204 — Determine whether a difference between the tone texture period and a preset standard value corresponding to the local feature attribute window exceeds a first preset threshold and whether a difference between the structure texture period and the preset standard value corresponding to the local feature attribute window exceeds the first preset threshold, to obtain a first determination result

Acquire front image sizes of the to-be-recognized banknotes based on the front images — 212

Acquire back image sizes of the to-be-recognized banknotes based on the back images — 213

Determine whether the front image sizes or the back image sizes go beyond a preset standard size range of the to-be-recognized banknotes, to obtain a fifth determination result — 214

205 — Acquire a texton corresponding to the region of the transmission image defined by the local feature attribute window

Acquire front light-transmittances of the to-be-recognized banknotes based on the front images — 215

Acquire back light-transmittances of the to-be-recognized banknotes based on the back images — 216

206 — Determine whether a difference between the texton and a predetermined standard texton corresponding to the local feature attribute window exceeds a second preset threshold, to obtain a second determination result

207 — Calculate a texture definition corresponding to the region of the transmission image defined by the local feature attribute window

Determine whether the front light-transmittances or the back light-transmittances go beyond a preset standard light-transmittance range of the to-be-recognized banknotes, to obtain a sixth determination result — 217

208 — Determine whether a difference between the texture definition and a preset standard value corresponding to the local feature attribute window exceeds a third preset threshold, to obtain a third determination result

Determine whether any one of the first determination result, second determination result, third determination result, fourth determination result, fifth determination result and sixth determination result is positive — 218

Yes

No

219 — Determine that the to-be-recognized banknotes are overlapped

220 — Determine that the to-be-recognized banknotes are not overlapped

**Figure 2**

24

**Figure 3a**

**Figure 3b**

**Figure 4a**

**Figure 4b**

**Figure 5a**

**Figure 5b**

**Figure 6a**

**Figure 6b**

Figure 7

Figure 8a

EP 3 352 146 B1

**Figure 8b**

**Figure 9a**

**Figure 9b**

30

**Figure 10a**

**Figure 10b**

```
┌─────────────────────────────┐
│   Front and back acquisition│─── 111
│            module           │
└──────────────┬──────────────┘
               │
┌──────────────┴──────────────┐
│    Banknote information      │─── 112
│     acquisition module       │
└──────────────┬──────────────┘
               │
┌──────────────┴──────────────┐
│ Coupling degree measurement │─── 113
│            module           │
└──────────────┬──────────────┘
               │
┌──────────────┴──────────────┐
│     Overlapping banknote    │─── 114
│     determination module    │
└──────────────┬──────────────┘
               │
┌──────────────┴──────────────┐
│  Overlapping banknote module│─── 115
└──────────────┬──────────────┘
               │
┌──────────────┴──────────────┐
│    Non-overlapping banknote │─── 116
│            module           │
└─────────────────────────────┘
```

**Figure 11**

**Figure 12**

**EP 3 352 146 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510594951
- DE 102005009332 A1